# EUROPEAN PATENT APPLICATION

(11) **EP 2 495 483 A2**
(43) Date of publication of application: **05.09.2012**
(21) Application number: 12157491.7
(22) Date of filing: 29.02.2012
(51) Int. Cl.: F16L 19/02

(54) **Asymmetrical multi-lobed annular seal for a connector assembly of a vehicle**

(30) Priority: 01.03.2011 US 201113037976
(71) Applicant: Deere & Company, Moline, IL 61265-8098 (US)
(72) Inventor: Kotz, George, Dubuque, IA Iowa 52001-8483 (US)
(74) Representative: Münch, Christian

(57) **Abstract**

A vehicle 150, 160 is provided having a fluid connector assembly 10. The fluid connector assembly 10 may include a face seal 20 positioned between connectors 12, 14. The face seal 20 may include an o-ring having an asymmetrical outer profile 100. The face seal 20 may include a top lobe, an outer lobe, and an inner lobe. The outer lobe may be positioned under a groove retaining lip of the connector assembly 10.

## Description

### Field

The present disclosure relates to an annular seal of a fluid connector assembly, and more particularly to a multi-lobed seal having an asymmetrical cross-section for use in a fluid connector assembly of a vehicle.

### Background and Summary

In hydraulic or pneumatic systems, conduit or hose connections generally include a face seal between connectors. The face seal typically consists of a standard o-ring positioned in a groove of one of the connectors. The connector may include a groove retaining lip for holding the o-ring in place. Standard o-rings, which typically include a circular cross-section, may be susceptible to slipping past the groove retaining lip and popping out of the face seal groove. Further, the displaced seals may be pinched between the connectors, causing potential damage to the seal.

A failed seal in a conduit connection may lead to hydraulic fluid leakage. In agricultural and construction equipment applications, fluid leaks may contaminate the ground and lead to a temporary shutdown of the harvest field or construction site. Failed seals may also necessitate repeated replacement or reinstallation of the o-rings in the connectors, causing additional downtime and decreased productivity.

According to an embodiment of the present disclosure, a vehicle is provided including a chassis, a ground engaging mechanism configured to support the chassis, and a fluid system supported by the chassis. The fluid system includes a fluid connector assembly having a first connector and a second connector configured to couple to the first connector. The first connector includes an end portion having an annular groove. The annular groove includes a first side wall, a second side wall positioned opposite the first side wall, a base wall extending between the first and second side walls, and a lip portion extending outwardly from the first side wall. The lip portion includes an inner surface positioned opposite the base wall. The first connector includes a seal positioned in the annular groove of the end portion. The seal includes a first convex surface, a second convex surface, and a concave surface extending between the first convex surface and the second convex surface. The first and second convex surfaces and the concave surface cooperate to form an asymmetrical outer profile of the seal. At least a portion of the first convex surface abuts the inner surface of the lip portion.

The seal can include a third convex surface and a second concave surface extending between the second convex surface and the third convex surface. The seal can further include a substantially flat base surface extending between the first convex surface and the third convex surface, wherein the base surface of the seal abuts the base wall of the annular groove. A second portion of the first convex surface of the seal may abut the first side wall of the annular groove, wherein the seal and the end portion cooperate to form a first gap between the at least a portion of the first convex surface and the second portion of the first convex surface and a second gap between the second portion of the first convex surface and the base surface. According to this embodiment of the invention, the radius of curvature of the second convex surface can be smaller than the radii of curvature of the first and third convex surfaces. Furthermore, the radius of curvature of the first convex surface can be substantially the same as the radius of curvature of the third convex surface. A radius of curvature of the concave portion can be substantially the same as a radius of curvature of the second concave portion. The end portion of the first connector can include an outer surface configured to face the second connector, wherein when the seal is in an uncompressed state, a portion of the second convex surface extends outwardly past the outer surface of the end portion.

According to another embodiment of the present disclosure, a vehicle is provided including a chassis, a ground engaging mechanism configured to support the chassis, and a fluid system supported by the chassis. The fluid system includes a fluid connector assembly having a first connector and a second connector configured to couple to the first connector. The first connector includes an end portion having an annular groove. The annular groove includes a first side wall, a second side wall positioned opposite the first side wall, and a base wall extending between the first and second side walls. The first connector includes a seal positioned in the annular groove of the end portion. The seal has an outer profile with a first convex arc, a second convex arc, and a third convex arc. The first, second, and third convex arcs each have a central angle, a radius of curvature, and an arc length. The central angle of each of the first, second, and third convex arcs is greater than 90 degrees.

According to this embodiment of the invention, the outer profile of the seal can further include a first concave arc extending between the first convex arc and the second convex arc and a second concave arc extending between the second convex arc and the third convex arc. The radius of curvature of the first concave arc can be substantially the same as a radius of curvature of the third concave arc. The arc length of the first convex arc can be greater than the arc length of the second and third convex arcs. The radius of curvature of the second convex arc may be less than the radii of curvature of the first and third convex arcs. The central angle of the first convex arc can be greater than or equal to about 150 degrees, the central angle of the second convex arc can be greater than or equal to about 140 degrees, and the central angle of the third convex arc can be greater than or equal to about 120 degrees. The seal can further include a substantially flat portion which extends between the first convex arc and the third convex arc, wherein the substantially flat portion is positioned adjacent the base wall of the annular groove. The first connector may further include a lip portion extending outwardly from the first side wall of the annular groove. The lip portion includes an inner surface positioned opposite the base wall and a first portion of the first convex arc is positioned adjacent the inner surface of the lip portion and a second portion of the first convex arc is positioned adjacent the first side wall of the annular groove.

According to yet another embodiment of the present disclosure, a vehicle is provided including a chassis, a ground engaging mechanism configured to support the chassis, and a fluid system supported by the chassis. The fluid system includes a fluid connector assembly having a first connector and a second connector configured to couple to the first connector. The first connector includes an end portion having an annular groove. The annular groove includes a first side wall, a second side wall positioned opposite the first side wall, and a base wall extending between the first and second side walls. The first connector includes a seal positioned in the annular groove of the end portion. The seal has an outer profile with a plurality of convex arcs. Each convex arc has a central angle, a radius of curvature, and an arc length. The sum of the central angles of the plurality of convex arcs is greater than 360 degrees.

According to this embodiment of the invention, the plurality of convex arcs can include a first convex arc, a second convex arc, and a third convex arc, the sum of the central angles of the first, second, and third convex arcs being greater than 360 degrees. The central angle of the first convex arc may be greater than the central angle of the second convex arc, and the central angle of the second convex arc may be greater than the central angle of the third convex arc. In this regard, the central angle of the first convex arc can be greater than or equal to about 150 degrees, the central angle of the second convex arc can be greater than or equal to about 140 degrees, and the central angle of the third convex arc can be greater than or equal to about 120 degrees. The first connector can further include a lip portion extending outwardly from the first side wall of the annular groove, wherein the first convex arc is positioned adjacent the lip portion and the first side wall of the annular groove. The outer profile further may include a first concave arc connecting the first convex arc to the second convex arc and a second concave arc connecting the second convex arc to the third convex arc. The outer profile may also include a substantially flat portion connecting the first convex arc to the third convex arc and being positioned adjacent the base wall of the annular groove.

According to still another embodiment of the present disclosure, a vehicle is provided including a chassis, a ground engaging mechanism configured to support the chassis, and a fluid system supported by the chassis. The fluid system includes a fluid connector assembly having a first connector and a second connector configured to couple to the first connector. The first connector includes an end portion having an annular groove. The annular groove includes a first side wall, a second side wall positioned opposite the first side wall, and a base wall extending between the first and second side walls. The first connector includes a seal positioned in the annular groove of the end portion. The seal has an outer profile including a first arc and a second arc. The first arc has a first center point and a first radius measured between the first center point and the first arc, and the second arc has a second center point and a second radius measured between the second center point and the second arc. The first center point is offset from the second center point. A distance between the first and second center points is less than a sum of the first and second radii.

According to this embodiment of the invention, the outer profile of the seal may further include a third arc having a third center point. A third radius is measured between the third center point and the third arc and a distance between the first and third center points is less than a sum of the first and third radii. A distance between the second and third center points is less than a sum of the second and third radii. The distance between the first and second center points may be greater than the distance between the second and third center points, and the distance between the second and third center points may be greater than the distance between the first and third center points. The first radius of the first arc can be also substantially the same as the third radius of the third arc. The first radius of the first arc and the third radius of the third arc may be greater than the second radius of the second arc. The first, second, and third arcs may be substantially convex, wherein the outer profile of the seal further includes a first concave arc connecting the first arc to the second arc and a second concave arc connecting the second arc to the third arc. The first and second concave arcs each can include a radius and an arc length, wherein the radii of the first and second concave arcs are substantially the same whereas the arc length of the first concave arc are greater than the arc length of the second concave arc.

### Brief Description of the Drawings

The above-mentioned and other features and advantages of the invention, and the manner of attaining them, will become more apparent and the disclosure itself will be better understood by reference to the following description taken in conjunction with the accompanying drawings, wherein:
FIG. 1 illustrates an exemplary connector assembly of the present disclosure;
FIG. 2 illustrates a detailed view of a mating end of the exemplary connector assembly of FIG. 1 including a groove portion;
FIG. 3 illustrates a perspective view of an exemplary o-ring seal of the connector assembly of FIG. 1;
FIG. 4 illustrates a top plan view of the o-ring seal of FIG. 3;
FIG. 5 illustrates a side view of the o-ring seal of FIG. 3;
FIG. 6 illustrates an exemplary outer profile of the o-ring seal of FIG. 3;
FIG. 7 illustrates a cross-sectional view of the o-ring seal of FIG. 3 retained within a groove portion of a connector;
FIG. 8 illustrates an exemplary vehicle incorporating the connector assembly of the present disclosure; and
FIG. 9 illustrates another exemplary vehicle incorporating the connector assembly of the present disclosure.

Corresponding reference characters indicate corresponding parts throughout the several views. The exemplifications set out herein illustrate exemplary embodiments of the invention, and such exemplifications are not to be construed as limiting the scope of the invention in any manner.

### Detailed Description

The embodiments disclosed herein are not intended to be exhaustive or to limit the disclosure to the precise forms disclosed in the following detailed description. Rather, the embodiments are chosen and described so that others skilled in the art may utilize their teachings.

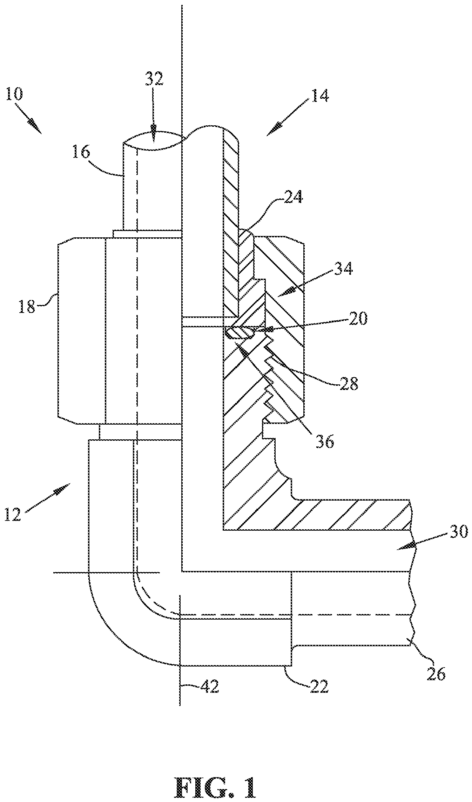

Referring to FIG. 1, an exemplary connector assembly 10 is illustrated. Connector assembly 10 includes a first connector 12 coupled to a second connector 14. In one embodiment, connectors 12, 14 include fittings. A face seal 20 provides a sealed contact between first connector 12 and second connector 14, as described herein. First connector 12 illustratively includes a tube or conduit 26 having an elbow portion 22 and a mating end 36. Second connector 14 is illustratively a tube coupling 14 including a tube or conduit 16 and a sleeve 24 positioned at a mating end 34 of tube coupling 14. Second connector 14 may include other suitable connectors or parts configured to mate with first connector 12. A coupler 18, illustratively a nut 18, is configured to couple mating end 34 of second connector 14 to mating end 36 of first connector 12. As illustrated, a threaded interface 28 between mating end 36 and nut 18 is configured to secure first connector 12 to nut 18 and second connector 14. The tightening of nut 18 is configured to draw second connector 14 axially toward first connector 12 and into sealed contact with first connector 12. In the illustrated embodiment, an end surface of sleeve 24 mates with face seal 20 to provide the sealed interface between first and second connectors 12, 14. Face seal 20 may alternatively engage other portions of second connector 14, such as an end surface of tube 16, for sealing the interface between first and second connectors 12, 14. Other configurations of connector assembly 10 may also be provided.

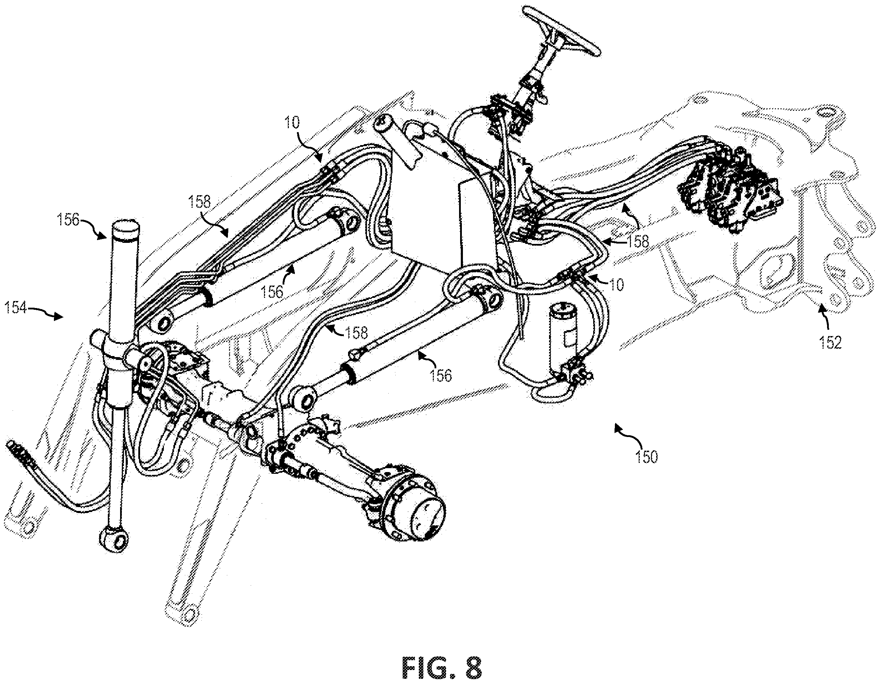

Connector assembly 10 is configured to provide a sealed fluid connection in a hydraulic or pneumatic fluid system. As illustrated, an interior portion or inner bore 30 extending through tube 26 is in fluid communication with an interior portion or inner bore 32 of tube 16. Connector assembly 10 may be used in a fluid system for construction or agricultural equipment, such as a hydraulic system of a loader, a backhoe, a skid steer, a dump truck, a motor grader, a log skidder or other skidder, a combine, a tractor, a bulldozer, a feller buncher, a crawler, a tree harvester, an excavator, a forwarder, a lawn mower, or another utility vehicle. See, for example, connector assembly 10 of vehicle 150 illustrated in FIG. 8 and described herein. Connector assembly 10 may also be used in hydraulic systems for other vehicles, industrial equipment, or other suitable applications.

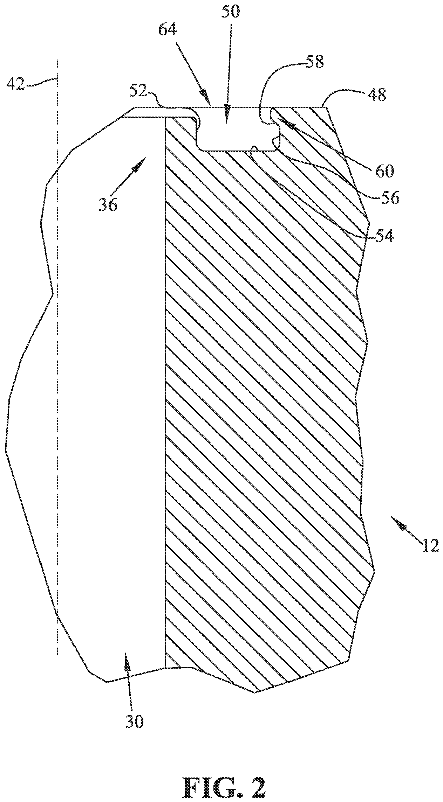

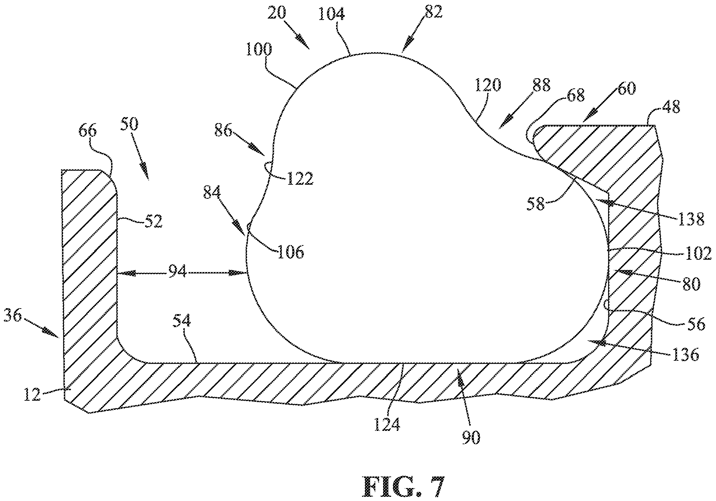

Referring to FIG. 2, first connector 12 includes an annular groove portion 50 at mating end 36 having a mouth or opening 64. Groove 50 illustratively includes an inner side wall 52, an outer side wall 56, and a base wall 54 extending between inner and outer walls 52, 56. In the illustrated embodiment, base wall 54 is substantially flat and is substantially parallel to an outer face 48 of connector 12. Base wall 54 is configured to provide a seat for seal 20. In one embodiment, inner and outer walls 52, 56 are substantially perpendicular to base wall 54 and are substantially parallel to a longitudinal axis 42 (see also FIG. 1) of connector 12. Inner and outer walls 52, 56 may alternatively be at an angle with respect to base wall 54. Groove 50 illustratively includes an inwardly projecting lip portion 60 extending between outer wall 56 and outer face 48. Lip portion 60 illustratively includes a substantially flat portion 58 adjacent outer wall 56 and a curved portion 68 (see FIG. 7) contiguous with flat portion 58 and outer face 48. Lip portion 60 may alternatively include a substantially flat wall positioned between flat portion 58 and outer face 48, as illustrated in FIG. 2. In the illustrated embodiment, seal 20 is received through opening 64 and retained in groove 50 with lip portion 60. Flat portion 58 is illustratively angled relative to base wall 54. Alternatively, groove 50 may include straight-sided inner and outer walls 52, 56 without a lip portion 60.

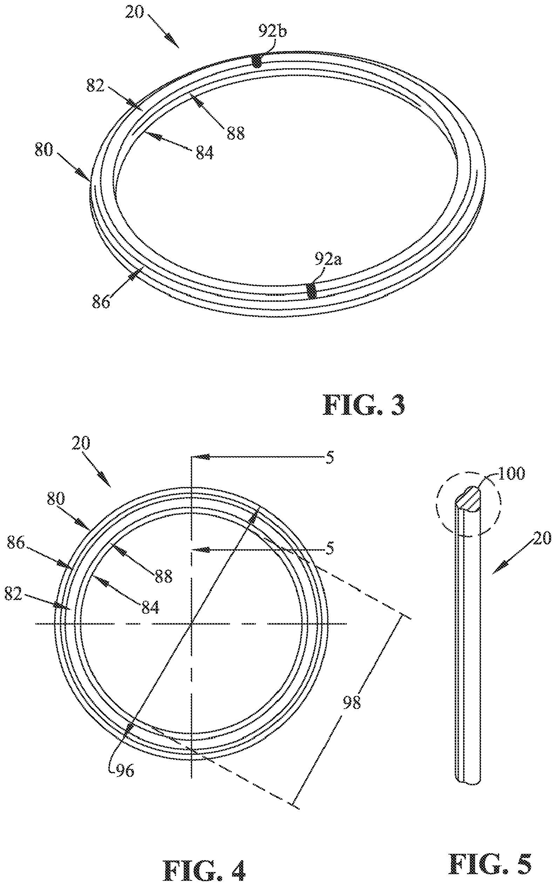

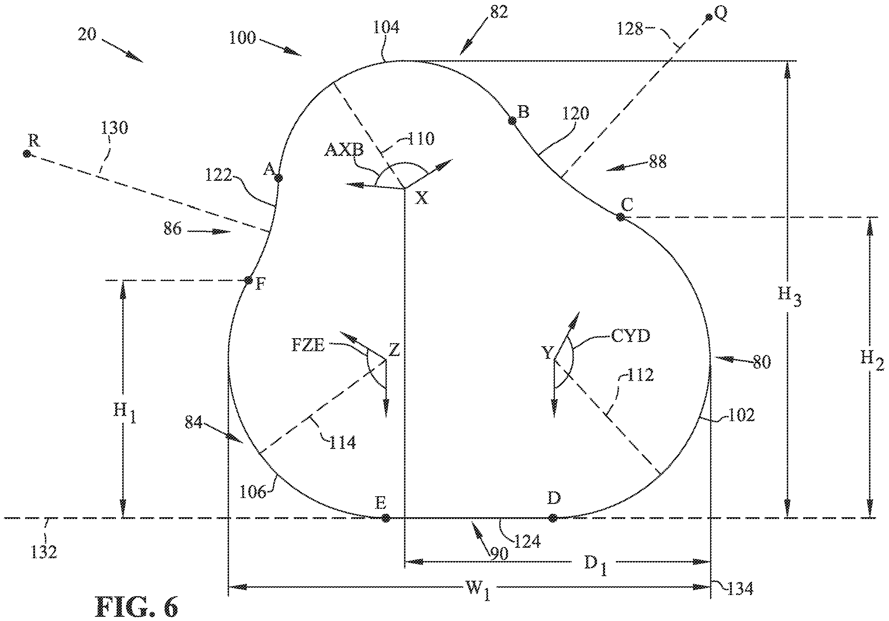

Referring to FIGS. 3, 4, and 5, face seal 20 is illustratively an o-ring seal having an asymmetrical cross-section 100 (see FIG. 5). Seal 20 may be made of a polymeric material. In one embodiment, seal 20 is comprised of an elastomeric material, such as a nitrile elastomer, a silicone elastomer, a fluorosilicone elastomer, or a fluorocarbon elastomer, for example. In the illustrated embodiment, seal 20 includes a total of three outer lobes. Seal 20 includes an outer lobe 80, a top lobe 82, and an inner lobe 84. An outer concave portion 86 is positioned between outer lobe 80 and top lobe 82, and an inner concave portion 88 is positioned between inner lobe 84 and top lobe 82. Seal 20 illustratively includes a substantially flat portion 90 (see FIGS. 6 and 7) extending between outer lobe 80 and inner lobe 84. As such, outer and inner lobes 80, 84 may be viewed as a single lobe having a flat portion 90 extending between two curved portions. Portion 90 may alternatively be a concave or convex curved portion. As illustrated in FIG. 3, seal 20 may include marks 92a, 92b illustratively positioned on top lobe 82 and diametrically opposed. Each mark 92a, 92b illustratively extends from outer concave portion 86 to inner concave portion 88. In one embodiment, marks 92a, 92b are color coded to identify the material or other characteristics of seal 20. Marks 92a, 92b may also facilitate proper orientation of seal 20 in groove 50.

As illustrated in FIG. 4, seal 20 has an outer diameter 96 and an inner diameter 98. As illustrated, outer lobe 80 defines outer diameter 96 and inner lobe 84 defines inner diameter 98. In one embodiment, outer diameter 96 is substantially the same length as the outer diameter of groove 50 as defined by outer wall 56 (see FIG. 2) of groove 50. In one embodiment, outer diameter 96 has a slightly greater length than the outer diameter of groove 50 as defined by outer wall 56 to facilitate retention of seal 20 within groove 50.

Referring to FIG. 6, an outer profile or cross-section 100 of seal 20 is illustrated. Each lobe 80, 82, 84 of seal 20 includes a curved or arcuate outer surface. Top lobe 82 includes a top arcuate surface 104 extending between points A and B of outer profile 100 and having a radius of curvature 110. Outer lobe 80 includes an outer arcuate surface 102 extending between points C and D of outer profile 100 and having a radius of curvature 112. Inner lobe 84 includes an inner arcuate surface 106 extending between points E and F of outer profile 100 and having a radius of curvature 114. In the illustrated embodiment, arcuate outer surfaces 102, 104, 106 of seal 20 form convex arcs of outer profile 100. In one embodiment, radii of curvature 112, 114 are substantially the same length, and radius of curvature 110 is shorter in length than radii of curvature 112, 114.

Outer profile 100 further includes intermediate surfaces extending between the arcuate surfaces 102, 104, and 106 and forming concave portions 86, 88 and flat portion 90. A first intermediate surface 120 extends between points B and C and connects top arcuate surface 104 and outer arcuate surface 102. A second intermediate surface 122 extends between points A and F and connects top arcuate surface 104 and inner arcuate surface 106. Intermediate surfaces 120, 122 are illustratively curved, concave surfaces forming concave arcs of outer profile 100. In particular, intermediate surface 120 has a radius of curvature 128 extending from a point Q located outside outer profile 100, and intermediate surface 122 has a radius of curvature 130 extending from a point R located outside outer profile 100. In one embodiment, radii of curvature 128, 130 are substantially the same length. In one embodiment, the arc length of first intermediate surface 120 is greater than the arc length of the second intermediate surface 122. Intermediate surfaces 120, 122 may alternatively be substantially flat surfaces. An intermediate or bottom surface 124 extends between points D and E of outer profile 100 and connects outer arcuate surface 102 and inner arcuate surface 106. In the illustrated embodiment, intermediate surface 124 is substantially flat and forms flat portion 90 of seal 20. As such, intermediate surface 124 is configured to abut base wall 54 of connector 12, as illustrated in FIG. 7 and described herein.

As illustrated in FIG. 6, outer profile 100 may be viewed as being formed with three intersecting rings - a first ring having a center point X and a radius of curvature 110 forming top arcuate surface 104, a second ring having a center point Y and a radius of curvature 112 forming outer arcuate surface 102, and a third ring having a center point Z and a radius of curvature 114 forming inner arcuate surface 106. In other words, in the illustrated embodiment, the distance between center points X and Y is less than the sum of radii 110, 112, the distance between center points X and Z is less than the sum of radii 110, 114, and the distance between center points Z and Y is less than the sum of radii 112, 114. Further, intermediate surfaces 120, 122, and 124 interconnect the three rings to form outer profile 100.

Referring still to FIG. 6, the convex arc formed with outer arcuate surface 102 has a central angle CYD measured between lines extending from center point Y to point C and extending from center point Y to point D. Further, outer arcuate surface 102 has an arc length measured between point C and point D. Similarly, the convex arc formed with top arcuate surface 104 has a central angle AXB measured between lines extending from center point X to point A and extending from center point X to point C. Further, top arcuate surface 104 has an arc length measured between point A and point B. Similarly, the convex arc formed with inner arcuate surface 106 has a central angle FZE measured between lines extending from center point Z to point E and extending from center point Z to point F. Further, inner arcuate surface 106 has an arc length measured between point E and point F. In the illustrated embodiment, the arc length of outer arcuate surface 102 is greater than the arc length of top arcuate surface 104 and inner arcuate surface 106.

Referring to FIG. 7, seal 20 is illustratively positioned in groove 50 of connector 12. To facilitate retention of seal 20 in groove 50, outer lobe 80 is positioned substantially beneath lip portion 60, and intermediate surface 124 is positioned against base wall 54. In the illustrated embodiment, outer arcuate surface 102 is positioned against outer wall 56 of first connector 12, although outer arcuate surface 102 may alternatively be spaced apart from outer wall 56. Flat portion 58 of lip portion 60 engages a portion of outer arcuate surface 102. In one embodiment, flat portion 58 is angled such that it substantially follows the contour of outer profile 100 of seal 20 along the engaged portion of outer arcuate surface 102. In the illustrated embodiment, flat portion 58 is configured to contact the outer surface of seal 20 at or near the transition between outer surface 102 and intermediate surface 120 (i.e. point C of outer profile 100). In one embodiment, the outer lobe 80 of seal 20 is at least slightly compressed between lip portion 60 and base wall 54 of connector 12 to facilitate retention of seal 20 within groove 50. Engagement of intermediate surface 124 with base wall 54 further facilitates retention of seal 20 with groove 50. In particular, intermediate surface 124 provides a flat surface area that contacts base wall 54 to create friction between seal 20 and base wall 54 for holding seal 20 in position within groove 50.

As illustrated, a pair of gaps 136, 138 may exist between seal 20 and outer wall 56 of connector 12 due to the rounded profile of outer lobe 80 and the flat profile of outer wall 56. A gap 94 is also provided between seal 20 and inner wall 52 when seal 20 is positioned in groove 50. Gap 94 may vary in size depending on the spacing of walls 52, 56 and the size of seal 20. In one embodiment, gap 94 may facilitate the installation of seal 20 into groove 50 and allow for seal 20 to expand when compressed during assembly of connector assembly 10. In particular, gap 94 may provide a space into which a compressed seal 20 may expand. In one embodiment, a compressed seal 20 expands to form a substantially oval-shaped cross-section when connector assembly 10 is assembled. In one embodiment, seal 20 expands during compression such that inner arcuate surface 106 contacts inner wall 52 of groove 50. Gaps 136, 138 may also provide an area for the expansion of seal 20 during compression. Gap 94 may also serve to reduce the likelihood of cutting or damaging seal 20 during an installation of seal 20. In one embodiment, gap 94 is sized such that seal 20 may achieve design requirements for the minimum and maximum fill percentage when positioned in groove 50. Such design requirements may include performance pressure requirements, such as burst, impulse, proof, and vacuum requirements.

In the illustrated embodiment, outer lobe 80 is larger than inner lobe 84, i.e., outer lobe 80 has a larger radius of curvature 112 than the radius of curvature 114 of inner lobe 84. As such, outer lobe 80 is positioned higher than inner lobe 84 in relation to base wall 54 of connector 12, as illustrated in FIG. 7. In particular, inner arcuate surface 106 of inner lobe 84 has a first height H₁ measured between point F and a horizontal reference line 132 extending tangentially from intermediate surface 124, as illustrated in FIG. 6. Similarly, outer arcuate surface 102 of outer lobe 80 has a second height H₂ measured between point C and line 132. Second height H₂ is illustratively greater than first height H₁.

In assembly, lip portion 60 is positioned above outer lobe 80 (relative to base wall 54), as illustrated in FIG. 7. When seal 20 is in an uncompressed state, outer face 48 of lip portion 60 is positioned below a top portion of top lobe 82. Accordingly, top lobe 82 extends outwardly from lip portion 60 and outer face 48 such that top arcuate surface 104 is configured to contact an end surface of second connector 14 (see FIG. 1) of connector assembly 10. The engagement of top arcuate surface 104 with second connector 14 provides a sealed interface between first connector 12 and second connector 14. In one embodiment, seal 20 is configured to compress due to the engagement of second connector 14 with top arcuate surface 104 of seal 20. The compression of seal 20 may cause seal 20 to expand laterally into gaps 136, 138 and into gap 94. In one embodiment, the rounded outer profile of lobes 80, 82, 84 may facilitate the lateral expansion of seal 20 during a compression of seal 20. In one embodiment, the compression of seal 20 may cause seal 20 to have a substantially oval-shaped outer profile 100, as illustrated in FIG. 1, for example. In one embodiment, when connector assembly 10 is assembled seal 20 expands such that inner arcuate surface 106 abuts inner side wall 52 of groove 50.

Referring again to FIG. 6, a vertical reference line 134 is shown extending tangentially to outer arcuate surface 102 of outer lobe 80 and perpendicular to horizontal reference line 132. Seal 20 illustratively has a width W₁ measured between line 134 and an outermost point of inner arcuate surface 106. Seal 20 has height H₃ measured between line 132 and a topmost point of top arcuate surface 104. In one embodiment, seal 20 has a height H₃ of about 1.8 millimeters (mm) and a width W₁ of about 1.9 mm, although seal 20 may have other dimensions suitable for retention in a face seal groove. In the illustrated embodiment, top lobe 82 is laterally offset relative to inner and outer lobes 84, 80. In particular, center point X of top lobe 82 is positioned laterally or horizontally closer to center point Z of inner lobe 84 than to center point Y of outer lobe 80. In other words, center point X of top lobe 82 is at a distance D₁ from reference line 134, and distance D₁ is illustratively greater than half the width W₁ of seal 20. The offset position of top lobe 82 relative to lobes 80, 84 may facilitate the positioning of outer lobe 80 beneath lip portion 60 of groove 50 (see FIG. 7) while allowing top lobe 82 to protrude outwardly from outer face 48 for contact with a corresponding connector (i.e., second connector 14 of FIG. 1).

In one embodiment, center point X is at a distance D₁ of about 1.2 mm from vertical reference line 134. In one embodiment, radius of curvature 110 has a length of about 0.5 mm, and radii of curvature 112, 114 have lengths of about 0.6 mm. In one embodiment, radii of curvature 128, 130 have lengths of about 1.0 mm. In one embodiment, the distance between center points X and Y is about 0.9 mm, the distance between center points Z and Y is about 0.65 mm, and the distance between center points X and Z is about 0.7 mm. In the illustrated embodiment, each central angle CYD, AXB, and FZE is greater than 90 degrees. In the illustrated embodiment, the sum of central angles CYD, AXB, and FZE is greater than 360 degrees. In one embodiment, central angle CYD is about 150 degrees, central angle AXB is about 140 degrees, and central angle FZE is about 120 degrees. Other suitable dimensions may be provided for seal 20.

In one embodiment, a cutting tool is provided that is configured to cut seal 20 from a mold based on the dimensions described herein. In one embodiment, seal 20 may deviate from the cutting tool dimensions after being cut from the mold due to shrinkage, curing, etc. The amount of size deviation or variation may depend on the type of material used for seal 20. In one embodiment, seal 20 may be designed to meet dimensional and contour specifications that provide a range of acceptable dimensions to allow for the shrinkage, curing, and other size deviations.

In one embodiment, the curved outer profile 100 of seal 20 serves to reduce scrap or waste during manufacture of a seal 20. In one embodiment, the rounded outer profile 100 also serves to reduce the difficulty of installing seal 20 into groove 50. In one embodiment, the shorter height H₁ of inner lobe 84 relative to height H₂ of outer lobe 80 further facilitates the insertion and installation of seal 20 in groove 50. In one embodiment, inner wall 52 of connector 12 includes a curved portion 66 (see FIG. 7) configured to further facilitate installation of seal 20, although portion 66 may alternatively include a flat surface or angled corner.

Seal 20 of connector assembly 10 may require replacement over time due to wearing or regularly scheduled maintenance. With reference to FIGS. 1 and 7, a method of installing a replacement seal 20 may include disassembling connector assembly 10 by removing or loosening nut 18 and removing second connector 14 to expose an original seal 20. The original seal 20 may be removed from groove 50 of first connector 12 by removing the seal 20 from engagement under lip portion 60. The replacement seal 20 may be inserted into groove 50. In particular, outer lobe 80 may be positioned between lip portion 60 and base wall 54 and bottom surface 124 may be placed against base wall 54. Arcuate surface 102 of outer lobe 80 may be positioned in contact with outer side wall 56. In one embodiment, a slight radial force may be applied to seal 20 to position outer lobe 80 under lip portion 60, causing a compression of outer lobe 80. Upon installing seal 20 in groove 50, second connector 14 may be coupled to first connector 12 and first and second connectors 12, 14 may be tightened together with nut 18, thereby compressing seal 20. As such, a sealed contact is provided between first and second connectors 12, 14 with seal 20. In one embodiment, groove 50 is cleaned prior to installation of the replacement seal 20. In one embodiment, oil or other lubricant is applied to seal 20 before or after installation to improve the sealing capacity of seal 20.

Referring to FIG. 8, an exemplary vehicle 150 utilizing connector assembly 10 and/or seal 20 is illustrated. Vehicle 150 includes a chassis 152 and a hydraulic system 154 supported by chassis 152. Ground engaging mechanisms, such as wheels, are configured to support chassis 152. Hydraulic system 154 includes hydraulic cylinders 156 and conduits or tubes 158. Hydraulic system 154 is illustratively configured to control steering and suspension of vehicle 150. Connector assemblies 10 are illustrated for connecting conduits 158 together. Seals 20 may be provided in the connector assemblies 10, as described above.

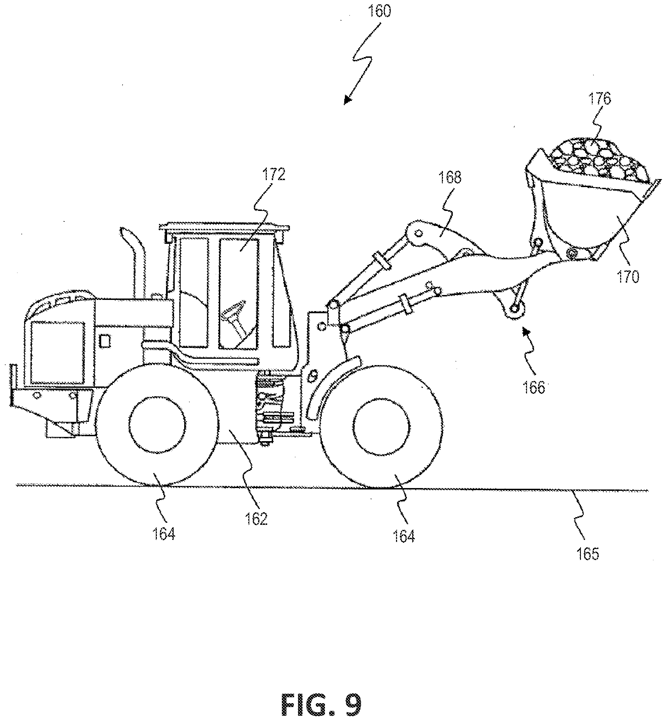

Referring to FIG. 9, another exemplary vehicle in the form of a loader 160 is illustrated. Loader 160 includes a chassis 162, an operator cab 172, and a ground engaging mechanism 164. Ground engaging mechanism 164 is capable of supporting chassis 162 and propelling chassis 162 across the ground 165. Although the illustrated loader 160 includes wheels as ground engaging mechanism 164, loader 160 may include other ground engaging mechanisms, such as steel tracks, rubber tracks, or other suitable ground engaging members. Loader 160 includes a loader assembly 166 having a loader boom 168 and a work tool 170 in the form of a bucket. Work tool 170 may be capable of moving, excavating, plowing, or performing other material handling functions on a load 176, such as dirt or other materials. Other suitable work tools 170 include, for example, blades, pallet forks, bail lifts, augers, harvesters, tillers, mowers, and grapples. Loader boom 168 is configured to move relative to chassis 162 to move and operate work tool 170. Connector assembly 10 and/or face seal 20 may be used in a hydraulic or pneumatic system of loader 160, such as for manipulating loader assembly 166 or other hydraulically or pneumatically controlled devices and systems of loader 160.

While this invention has been described as having preferred designs, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this disclosure pertains and which fall within the limits of the appended claims.

## Claims

1. Fluid connector assembly including a first connector (12) and a second connector (14) configured to couple to the first connector (12), the first connector (12) including:
an end portion (36) having an annular groove (50), the annular groove (50) including a first side wall (52), a second side wall (56) positioned opposite the first side wall (52), a base wall (54) extending between the first and second side walls (52, 56), and a lip portion (60) extending outwardly from the first side wall (52), the lip portion (60) including an inner surface (58) positioned opposite the base wall (54), and
an annular seal (20) positioned in the annular groove (50) of the end portion (36), the annular seal (20) including a first convex surface (102), a second convex surface (104), and a concave surface (120) extending between the first convex surface (102) and the second convex surface (104), the first and second convex surfaces (102, 104) and the concave surface (120) cooperating to form an asymmetrical outer profile (100) of the annular seal (20), at least a portion of the first convex surface (102) abutting the inner surface (58) of the lip portion (60).

2. The fluid connector assembly of claim 1, wherein the annular seal (20) includes a third convex surface (106) and a second concave surface (122) extending between the second convex surface (104) and the third convex surface (106).

3. The fluid connector assembly of claim 2, wherein the annular seal (20) further includes a substantially flat base surface (124) extending between the first convex surface (102) and the third convex surface (106), the base surface (124) of the annular seal (20) abutting the base wall (54) of the annular groove (50).

4. The fluid connector assembly of claim 3, wherein a second portion of the first convex surface (102) of the annular seal (20) abuts the first side wall (52) of the annular groove (50), wherein the annular seal (20) and the end portion (36) cooperate to form a first gap (138) between the at least a portion of the first convex surface(102) and the second portion of the first convex surface (104) and a second gap (136) between the second portion of the first convex surface (102) and the base surface (124).

5. The fluid connector assembly of claim 2, wherein a radius of curvature (110) of the second convex surface (104) is smaller than radii of curvature (112, 114) of the first and third convex surfaces (102, 106).

6. The fluid connector assembly of claim 5, wherein the radius of curvature (112) of the first convex surface (102) is substantially the same as the radius of curvature (114) of the third convex surface (106).

7. The fluid connector assembly of claim 2, wherein a radius of curvature (128) of the concave portion (120) is substantially the same as a radius of curvature (130) of the second concave portion (122).

8. The fluid connector assembly of claim 1, wherein the end portion (36) of the first connector (12) includes an outer surface (48) configured to face the second connector (14), wherein when the annular seal (20) is in an uncompressed state, a portion of the second convex surface (104) extends outwardly past the outer surface (48) of the end portion (36).

9. The fluid connector assembly of one of the claims 2 to 8, wherein the outer profile (100) of the annular seal (20) includes a first convex arc formed with first convex surface (102), a second convex arc formed with second convex surface (104), and a third convex arc formed with third convex surface (106), the first, second, and third convex arcs each having a central angle (CYD, AXB, FZE), a radius of curvature (112, 110, 114), and an arc length, the central angle (CYD, AXB, FZE) of each of the first, second, and third convex arcs being greater than 90 degrees.

10. The fluid connector assembly of claim 9, wherein the arc length of the first convex arc is greater than the arc length of the second and third convex arcs.

11. The fluid connector assembly of one of the claims 2 to 8, wherein the outer profile (100) of the annular seal (20) includes a first convex arc formed with first convex surface (102), a second convex arc formed with second convex surface (104), and a third convex arc formed with third convex surface (106), the first, second, and third convex arcs each having a central angle (CYD, AXB, FZE), a radius of curvature (112, 110, 114), and an arc length, the sum of the central angles (CYD, AXB, FZE) of the first, second, and third convex arcs being greater than 360 degrees.

12. The fluid connector assembly of claim 11, wherein the central angle (CYD) of the first convex arc is greater than the central angle (AXB) of the second convex arc, and the central angle (AXB) of the second convex arc is greater than the central angle (FZE) of the third convex arc.

13. The fluid connector assembly of claim 11, wherein the central angle (CYD) of the first convex arc is greater than or equal to about 150 degrees, the central angle (AXB) of the second convex arc is greater than or equal to about 140 degrees, and the central angle (FZE) of the third convex arc is greater than or equal to about 120 degrees.

14. The fluid connector assembly of one of the claims 2 to 8, wherein the outer profile (100) of the annular seal (20) includes a first convex arc formed with first convex surface (102) and a second convex arc formed with second convex surface (104), the first convex arc having a first center point (Y) and a first radius (112) measured between the first center point (Y) and the first convex arc, the second convex arc having a second center point (X) and a second radius (110) measured between the second center point (X) and the second convex arc, the first center point (Y) being offset from the second center point (X), a distance between the first and second center points being less than a sum of the first and second radii.

15. The fluid connector assembly of claim 14, the outer profile (100) of the annular seal (20) further including a third convex arc formed with the third convex surface (106) and having a third center point (Z), and a third radius (114) measured between the third center point (Z) and the third convex arc, a distance between the first and third center points (Y, Z) being less than a sum of the first and third radii (112, 114), and a distance between the second and third center points (X, Z) being less than a sum of the second and third radii (110, 114).

16. The fluid connector assembly of claim 15, wherein the distance between the first and second center points (Y, X) is greater than the distance between the second and third center points (X, Z), and the distance between the second and third center points (X, Z) is greater than the distance between the first and third center points (Y, Z).

17. A vehicle including:
a chassis (152, 162);
a ground engaging mechanism (164) configured to support the chassis (152, 162);
a fluid system (154) supported by the chassis (152, 162) and including a fluid connector assembly (10) according to one of the preceding claims.
